# EUROPEAN PATENT APPLICATION

(11) **EP 4 773 568 A1**
(43) Date of publication of application: **08.07.2026**
(21) Application number: 24862358.9
(22) Date of filing: 15.03.2024
(51) Int. Cl.: H04L 45/745, H04L 45/64, H04L 45/741

(54) **GATEWAY DEVICE, CONTROL METHOD, AND PROGRAM**

(30) Priority: 07.09.2023 JP 2023145591
(71) Applicant: Softbank Corp., Tokyo 105-7529 (JP)
(72) Inventor: MATSUSHIMA Satoru, Tokyo 105-7529 (JP); KAWAKAMI Yuya, Tokyo 105-7529 (JP)
(74) Representative: Dilg, Haeusler, Schindelmann Patentanwaltsgesellschaft mbH
(86) International application number: PCT/JP2024/010320
(87) International publication number: WO 2025/052701

(57) **Abstract**

Provided is a gateway device including a routing table for reception for forwarding an incoming IP packet which is received from outside and which has a payload IP packet encapsulated, a routing table for payload forwarding for forwarding the payload IP packet, and a routing table for fallback for forwarding the incoming IP packet when an entry for forwarding the payload IP packet included in the incoming IP packet is not included in the routing table for payload forwarding.

## Description

### TECHNICAL FIELD

The present invention relates to a gateway device, a control method, and a program.

### BACKGROUND ART

Patent Document 1 describes ULCL UPF (Uplink Classifier User Plane Function).

### RELATED ART DOCUMENTS

### PATENT DOCUMENTS

Patent Document 1: Japanese Patent Application Publication No. 2021-175108

### GENERAL DISCLOSURE

According to an embodiment of the present invention, a gateway device is provided. The gateway device may include a routing table for reception for forwarding an incoming IP packet which is received from outside and which has a payload IP packet encapsulated. The gateway device may include a routing table for payload forwarding for forwarding the payload IP packet. The gateway device may include a routing table for fallback for forwarding the incoming IP packet when an entry for forwarding the payload IP packet included in the incoming IP packet is not included in the routing table for payload forwarding.

The gateway device may include a packet reception unit which receives an IP packet. The gateway device may include a route control unit which carries out control in a manner that destination route lookup of the incoming IP packet received by the packet reception unit is performed by using the routing table for reception, destination route lookup of the payload IP packet is performed by using the routing table for payload forwarding when a route of the incoming IP packet exists, the payload IP packet is transmitted to a destination when a route of the payload IP packet exists, destination route lookup of the incoming IP packet is performed by using the routing table for fallback when a route of the payload IP packet does not exist. The incoming IP packet may include an IP header, a UDP header, a GTP-U header, and the payload IP packet, and when a route of the payload IP packet exists, the route control unit may transmit, to the destination, the incoming IP packet obtained by converting the IP header, the UDP header, and the GTP-U header into another header. The route control unit may encapsulate the payload IP packet by an SRv6 header. When an output interface which forwards a packet is a VLAN interface, the route control unit may use a VLAN header in addition to an Ethernet (registered trademark) header as the appropriate header. When an output interface which forwards a packet is a VLAN interface and the VLAN interface is also an SRv6 backbone interface, the route control unit may use an Ethernet header, a VLAN header, an IPv6 header, and an SR header as the appropriate header. When a route of the payload IP packet exists, the route control unit may transmit, to the destination, the incoming IP packet obtained by converting the IP header, the UDP header, and the GTP-U header into a header compliant with SRv6 which includes an IPv6 header or an IPv6 header and an SR header. When a route of the payload IP packet exists, the route control unit may transmit, to a destination of the payload IP packet, the payload IP packet encapsulated by an appropriate header according to a result of the destination route lookup of the payload IP packet.

In any of the gateway devices, when a route of the incoming IP packet exists, the route control unit may carry out the control in a manner that memory location difference information representing a memory location difference between the incoming IP packet and the payload IP packet is decided, a pointer is advanced to the payload IP packet, and destination route lookup of the payload IP packet is performed by using the routing table for payload forwarding when a route of the incoming IP packet exists, and in a manner that the incoming IP packet is restored by using the memory location difference information, and destination route lookup of the incoming IP packet is performed by using the routing table for fallback when a route of the payload IP packet does not exist.

In any of the gateway devices, the incoming IP packet may include an IP header, a UDP header, a GTP-U header, and the payload IP packet, and the route control unit may carry out the control in a manner that the IP header, the UDP header, and the GTP-U header are removed from the incoming IP packet, and destination route lookup of the payload IP packet is performed by using the routing table for payload forwarding when a route of the incoming IP packet exists, and in a manner that the incoming IP packet is restored by using the IP header, the UDP header, and the GTP-U header, and destination route lookup of the incoming IP packet is performed by using the routing table for fallback when a route of the payload IP packet does not exist. The route control unit may carry out the control in a manner that a routing table that has been set as the routing table for fallback by another routing table does not have a setting and a routing entry for specifying the another routing table as the routing table for fallback.

In any of the gateway devices, in a case where a route of the incoming IP packet exists, the route control unit may carry out the control in a manner that destination route lookup of the payload IP packet is performed by using the routing table for payload forwarding when the incoming IP packet is not a GTP-U message, the payload IP packet encapsulated by an appropriate header according to a destination route lookup result of the payload IP packet is transmitted to the destination when a route of the payload IP packet exists, and destination route lookup of the incoming IP packet is performed by using the routing table for fallback when a route of the payload IP packet does not exist, and carry out the control in a manner that destination route lookup of the incoming IP packet is performed by using the routing table for fallback without performing destination route lookup using the routing table for payload forwarding when the incoming IP packet is a GTP-U message. The packet that is not a GTP-U message may be a packet a GTP-U message type of which is 255. The packet that is a GTP-U message may be a packet a GTP-U message type of which is in a range from 0 to 254.

In any of the gateway devices, the routing table for reception may have a routing entry that specifies the routing table for payload forwarding and that can specify the routing table for fallback. The routing table for reception may specify the routing table for payload forwarding and the routing table for fallback by a routing entry which indirectly refers to a routing entry which is registered in another routing table and that specifies the routing table for payload forwarding and the routing table for fallback. The another routing table may be, for example, a default routing table of the gateway device. The another routing table may be, for example, a global routing table of the gateway device. The routing table for reception may have a routing entry that can specify the routing table for fallback. The routing table for reception may be able to specify the routing table for fallback. The routing table for payload forwarding may include a routing entry representing fallback. The route control unit may carry out the control in a manner that a routing table that has been set as a routing table for fallback by another routing table does not have a setting or a routing entry for specifying another routing table as a routing table for fallback.

According to an embodiment of the present invention, a control method which is executed by a computer is provided. The control method may include receiving a packet by receiving an IP packet having a payload IP packet encapsulated by an IP header or an IP header and a tunnel protocol header. The control method may include controlling a route by carrying out control in a manner that destination route lookup of an incoming IP packet received in receiving the packet is performed by using a routing table for reception for forwarding the incoming IP packet, destination route lookup of the payload IP packet is performed by using a routing table for payload forwarding for forwarding the payload IP packet when a route of the incoming IP packet exists, the payload IP packet is transmitted to a destination of the payload IP packet or a header obtained by encapsulating the payload IP packet is converted and transmitted to the destination when a route of the payload IP packet exists, and when a route of the payload IP packet does not exist, destination route lookup of the incoming IP packet is performed by using a routing table for fallback for forwarding the incoming IP packet if an entry for forwarding the payload IP packet is not included in the routing table for payload forwarding.

According to an embodiment of the present invention, a program for causing a computer to execute the control method is provided.

The summary clause does not necessarily describe all necessary features of the embodiments of the present invention. The present invention may also be a sub-combination of the features described above.

### BRIEF DESCRIPTION OF THE DRAWINGS

Fig. 1 schematically illustrates an example of a gateway device 100.
Fig. 2 schematically illustrates an example of a functional configuration of the gateway device 100.
Fig. 3 schematically illustrates an example of a flow of software processing by the gateway device 100.
Fig. 4 schematically illustrates an example of a flow of hardware processing by the gateway device 100.
Fig. 5 schematically illustrates an example of a setting 300.
Fig. 6 schematically illustrates an example of a configuration of a packet switching programmable ASIC (Application Specific Integrated Circuit).
Fig. 7 schematically illustrates an example of a hardware configuration of a computer 1200 which functions as the gateway device 100.

### DESCRIPTION OF EXEMPLARY EMBODIMENTS

The present invention will be described below through embodiments of the invention, but the following embodiments do not limit the invention according to the claims. Furthermore, not all of combinations of features described in the embodiments are essential to the solving means of the invention.

A gateway device has been proposed which has a function of converting a packet compliant with GTP-U used in a mobile network that is a network for communication based on a communication method compliant with a 3rd Generation Partnership Project (3GPP (registered trademark)) standard into a packet compliant with SRv6. The gateway device looks up an entry which matches a destination address for an incoming IP packet including, for example, an IP header, a GTP-U header, and a payload IP packet, removes the GTP-U header when the entry exists, performs route lookup using a routing table for payload forwarding for looking up a payload IP packet, adds an IPv6 header or an IPv6 header and an SRv6 header to the packet when the entry exists, and forwards the packet to an SRv6 network. With this configuration, an appropriate conversion can be performed, but an issue occurs when, after route lookup using a routing table for payload forwarding is performed, no match is made to any entry or a match is made to only a default route. In an ordinary IP network or the like, when a destination is not found, a packet is dropped. However, a gateway device which performs a relay between a mobile network and an SRv6 network is not meant to simply drop a packet just because the destination is not found. When the destination is not found, the gateway device needs to transmit this GTP packet to a 5G node that is originally supposed to receive the packet. However, a gateway device having such a function has not existed. A gateway device 100 according to the present embodiment includes a function contributing to a solution of the issue.

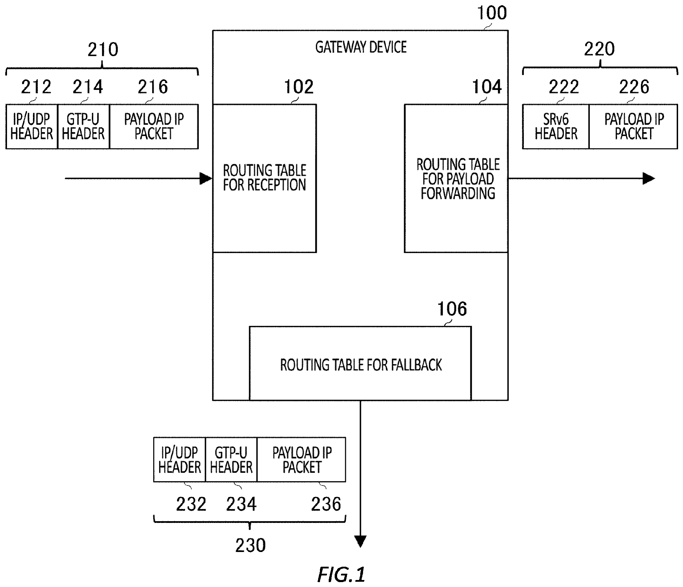

Fig. 1 schematically illustrates an example of the gateway device 100. The gateway device 100 has a function of converting a packet received from a mobile network and transmitting the converted packet to an IP network such as an SR (Segment Routing) network. The gateway device 100 forwards, for example, an IP packet received from a wireless base station that is an IP packet originally supposed to be forwarded to a node of UPF (User Plane Function) or the like based on a GTP-U (GPRS Tunneling Protocol for User Plane) header to a server of MEC (Multi-access Edge Computing) or the like regardless of the GTP-U header.

The gateway device 100 encapsulates a payload IP packet by an appropriate header according to a result of destination route lookup of the payload IP packet which is included in a packet compliant with GTP-U received from a wireless base station via a mobile network and transmits the packet to a server such as MEC. For example, the gateway device 100 may perform a conversion into a packet compliant with SRv6 or the like according to the result of the destination route lookup of the payload IP packet which is included in the packet compliant with GTP-U received from the wireless base station via the mobile network and transmit the packet to the server such as MEC via an SR network. For example, the gateway device 100 may encapsulate the payload IP packet by an Ethernet header according to the result of the destination route lookup of the payload IP packet which is included in the packet compliant with GTP-U received from the wireless base station via the mobile network and transmit the packet to the server such as MEC.

The gateway device 100 may decide, based on a result of route lookup, an appropriate header used for encapsulation of a payload IP packet. Specifically, for example, when an output interface for forwarding a packet is a VLAN (Virtual Local Area Network) interface, the gateway device 100 may use a VLAN header in addition to an Ethernet (registered trademark) header as the appropriate header. In addition, when the VLAN interface is also an SRv6 backbone interface, the gateway device 100 may use an Ethernet header, a VLAN header, an IPv6 header, and an SR header as the appropriate header. Note that the gateway device may use various headers as the appropriate header based on a type of an output interface of a result of route lookup. Hereinafter, when an appropriate header needs to be decided, a header decided by a similar method can be used.

Fig. 1 exemplifies a case where the gateway device 100 receives an incoming IP packet 210 including an IP/UDP (User Datagram Protocol) header 212, a GTP-U header 214, and a payload IP packet 216, the gateway device 100 converts the incoming IP packet 210 into an outgoing IP packet 220 including an SRv6 header 222 including an IPv6 header or an IPv6 header and an SR header, and a payload IP packet 226 and transmits the packet to an SR network. The payload IP packet 226 and the payload IP packet 216 may be the same.

The gateway device 100 has a routing table for reception 102 for forwarding the incoming IP packet 210 and a routing table for payload forwarding 104 for forwarding the payload IP packet 216. When the gateway device 100 receives the incoming IP packet 210, the gateway device 100 performs destination route lookup of the incoming IP packet 210 by using the routing table for reception 102. When a route of the incoming IP packet 210 exists, the gateway device 100 performs destination route lookup of the payload IP packet 216 by using the routing table for payload forwarding 104. Herein, when a route of the payload IP packet 216 exists, the gateway device 100 generates the outgoing IP packet 220 including the SRv6 header 222 which includes the IPv6 header or the IPv6 header and the SR header, and the payload IP packet 226 according to a result of the destination route lookup and transmits the packet towards a destination of the outgoing IP packet 220.

On the other hand, when a route of the payload IP packet 216 does not exist, according to a conventional network function, the incoming IP packet 210 is dropped. However, dropping of the incoming IP packet 210 that is originally supposed to be forwarded to a node such as UPF is not desired because a packet originally supposed to be forwarded to a mobile network may be dropped. In addition, even when the payload IP packet 216 can be forwarded to the destination to which the packet is originally supposed to be forwarded by being matched to a default route, because the payload IP packet 216 bypasses UPF, it becomes difficult to carry out control as the mobile network.

In view of the above, the gateway device 100 according to the present embodiment further has a routing table for fallback 106 for forwarding the incoming IP packet 210 when an entry for forwarding the payload IP packet 216 included in the incoming IP packet 210 is not included in the routing table for payload forwarding 104. In addition, the routing table for reception 102 included in the gateway device 100 may have a routing entry that specifies the routing table for payload forwarding 104 and that can specify the routing table for fallback 106. Alternatively, the routing table for reception 102 may have a routing entry that specifies the routing table for fallback 106 and that specifies the routing table for payload forwarding 104. In addition, the routing table for payload forwarding 104 may include a routing entry representing fallback. Because the gateway device 100 has the routing table for fallback 106, the incoming IP packet 210 does not drop when an entry for forwarding the payload IP packet 216 is not included in the routing table for payload forwarding 104, and the gateway device 100 can make it possible to transmit the packet to a node such as UPF that is an original transmission destination.

When a route of the payload IP packet 216 does not exist, the gateway device 100 performs destination route lookup of the incoming IP packet 210 by using the routing table for fallback 106. An original destination of the incoming IP packet 210 may be registered in the routing table for fallback 106. With this configuration, the gateway device 100 can make it possible to transmit the incoming IP packet 210 to the original destination. As long as the incoming IP packet 210 can be transmitted to the original destination, a destination route with a shorter prefix length including the original destination may be registered in the routing table for fallback 106.

The gateway device 100 may have the routing table for reception 102, the routing table for payload forwarding 104, and the routing table for fallback 106 based on a VRF (Virtual Routing and Forwarding) function. The gateway device 100 may have the routing table for reception 102, the routing table for payload forwarding 104, and the routing table for fallback 106 based on a fib (forwarding information base) table function.

To avoid a loop that repeats fallback indefinitely, the gateway device 100 may carry out the control in a manner that when a routing entry for specifying a routing table for fallback is registered in a routing table that has been set as a routing table for fallback by another routing table, the routing entry is automatically deleted, or such a routing entry is not to be registered. The gateway device 100 may carry out the control in a manner that specification of a different routing table as a routing table for fallback in a routing table that has been set as a routing table for fallback by another routing table cannot be performed.

The gateway device 100 processes the incoming IP packet 210, for example, in the following flow. The gateway device 100 performs destination route lookup of the incoming IP packet 210 by using the routing table for reception 102, and when a route of the incoming IP packet 210 exists, decides memory location difference information representing a memory location difference between the incoming IP packet 210 and the payload IP packet 216. The gateway device 100 may decide memory location difference information representing a difference between a memory location at a beginning of the incoming IP packet 210 and a memory location at a beginning of the payload IP packet 216 included in the incoming IP packet 210. The gateway device 100 advances a pointer to the beginning of the payload IP packet 216 and performs destination route lookup of the payload IP packet 216 by using the routing table for payload forwarding 104. When a route of the payload IP packet 216 exists, the gateway device 100 transmits the outgoing IP packet 220 including the SRv6 header 222 which includes the IPv6 header or the IPv6 header and the SR header, and the payload IP packet 226 to a destination according to a result of the destination route lookup. When a route of the payload IP packet 216 does not exist, the gateway device 100 restores the incoming IP packet 210 by using the memory location difference information and performs destination route lookup of the incoming IP packet 210 by using the routing table for fallback 106. The gateway device 100 transmits an outgoing IP packet 230 including an IP/UDP header 232, a GTP-U header 234, and a payload IP packet 236 to the destination. The IP/UDP header 232, the GTP-U header 234, and the payload IP packet 236 may be the same as the IP/UDP header 212, the GTP-U header 214, and the payload IP packet 216. In this manner, the gateway device 100 may achieve forwarding of the incoming IP packet 210 by software processing.

The gateway device 100 processes the incoming IP packet 210, for example, in the following flow. The gateway device 100 performs destination route lookup of the incoming IP packet 210 by using the routing table for reception 102, removes the IP/UDP header 212 and the GTP-U header 214 from the incoming IP packet 210 to be separately stored when a route of the incoming IP packet 210 exists, and performs destination route lookup of the payload IP packet 216 by using the routing table for payload forwarding 104. When a route of the payload IP packet 216 exists, the gateway device 100 transmits the outgoing IP packet 220 obtained by adding the SRv6 header 222 which includes the IPv6 header or the IPv6 header and the SR header to the payload IP packet 226 to the destination according to a result of the destination route lookup. When a route of the payload IP packet 216 does not exist, the gateway device 100 restores the incoming IP packet 210 by using the IP/UDP header 212 and the GTP-U header 214 and performs destination route lookup of the incoming IP packet 210 by using the routing table for fallback 106. The gateway device 100 transmits an outgoing IP packet 230 including an IP/UDP header 232, a GTP-U header 234, and a payload IP packet 236 to the destination. With this configuration, the gateway device 100 can also achieve forwarding of the incoming IP packet 210 by hardware processing.

As a technique of extracting an IP packet consistent with a particular condition among IP packets transmitted by a wireless base station and transmitting the extracted IP packet to a different Data Network (DN), ULCL has been proposed. By using ULCL, such a configuration can be achieved that a certain IP packet is forwarded to MEC, and a certain IP packet is forwarded to UPF. However, according to ULCL, a session and a tunnel need to be formed between ULCL UPF and each of the wireless base station, UPF, and MEC. In contrast to this, in accordance with the gateway device 100 according to the present embodiment, for example, as long as a session and a tunnel are formed between the wireless base station and UPF and between the wireless base station and MEC, control can be carried out in a manner that the IP packet can be forwarded to MEC or forwarded to UPF by the gateway device 100 therebetween, and the number of sessions and tunnels as a whole can be reduced. With this configuration, it is possible to contribute to an increase in management flexibility and an increase in communication efficiency.

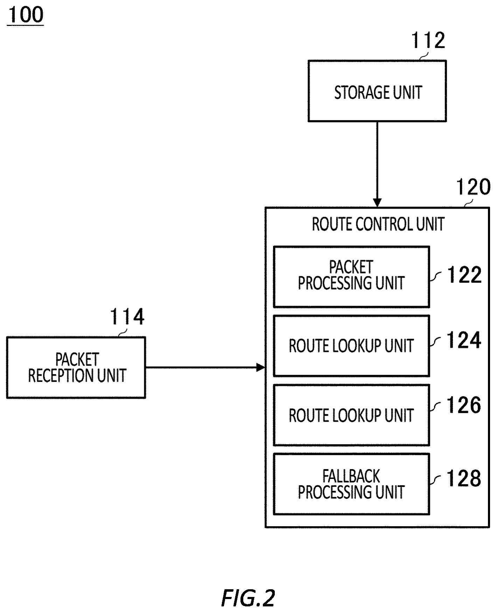

Fig. 2 schematically illustrates an example of a functional configuration of the gateway device 100. The gateway device 100 includes a storage unit 112, a packet reception unit 114, and a route control unit 120. The route control unit 120 has a packet processing unit 122, a route lookup unit 124, a route lookup unit 126, and a fallback processing unit 128. It is not necessarily essential for the route control unit 120 to have all of these units.

The storage unit 112 stores various types of data. The storage unit 112 stores the routing table for reception 102. The storage unit 112 stores the routing table for payload forwarding 104. The storage unit 112 stores the routing table for fallback 106.

The packet reception unit 114 receives an IP packet from outside. The packet reception unit 114 may receive an IP packet from a mobile network. The packet reception unit 114 may receive an IP packet from a wireless base station. The packet reception unit 114 may receive an IP packet in which a payload IP packet is encapsulated.

The route control unit 120 carries out control in the following manner. That is, the route control unit 120 performs destination route lookup of the incoming IP packet received by the packet reception unit 114 by using the routing table for reception 102 and when a route of the incoming IP packet exists, performs destination route lookup of the payload IP packet included in the incoming IP packet by using the routing table for payload forwarding 104. When a route of the payload IP packet exists, the route control unit 120 transmits the payload IP packet to the destination according to a result of the destination route lookup, and when a route of the payload IP packet does not exist, the route control unit 120 performs destination route lookup of the incoming IP packet by using the routing table for fallback 106.

For example, in a case where an incoming IP packet includes an IP header, a GTP-U header, and a payload IP packet, when a route of the payload IP packet exists as a result of performing destination route lookup of the payload IP packet by using the routing table for payload forwarding 104, the route control unit 120 transmits the payload IP packet encapsulated by an appropriate header according to the result of the destination route lookup to the destination as an outgoing IP packet. The route control unit 120 may encapsulate the payload IP packet by an SRv6 header, for example.

The route control unit 120 may carry out the control in a manner that when a route of the incoming IP packet exists, memory location difference information representing a memory location difference between the incoming IP packet and the payload IP packet is decided, a pointer is advanced to a beginning of the payload IP packet, destination route lookup of the payload IP packet is performed by using the routing table for payload forwarding 104, and when a route of the payload IP packet does not exist, the incoming IP packet is restored by using the memory location difference information, and destination route lookup of the incoming IP packet is performed by using the routing table for fallback 106.

The route control unit 120 may carry out the control in a manner that when a route of the incoming IP packet exists, the IP header, the UDP header, and the GTP-U header are removed from the incoming IP packet to be separately stored, destination route lookup of the payload IP packet is performed by using the routing table for payload forwarding 104, and when a route of the payload IP packet does not exist, the incoming IP packet is restored by using the IP header, the UDP header, and the GTP-U header, and destination route lookup of the incoming IP packet is performed by using the routing table for fallback 106.

The route control unit 120 may carry out the control in a manner that a routing table that has been set as a routing table for fallback by another routing table does not have a setting or a routing entry for specifying another routing table as a routing table for fallback.

The packet processing unit 122 may process the incoming IP packet by using the route lookup unit 124, the route lookup unit 126, and the fallback processing unit 128. The route lookup unit 124 performs destination route lookup of the incoming IP packet by using the routing table for reception 102. The route lookup unit 124 may be an example of a first route lookup unit.

As a result of the destination route lookup by the route lookup unit 124, the packet processing unit 122 may decide the routing table for payload forwarding 104, the routing table for fallback 106, and the memory location difference information between the incoming IP packet and the payload IP packet and activate destination route lookup of the payload IP packet as a next process.

As described above, the routing table for payload forwarding 104 may include a routing entry representing fallback, and the packet processing unit 122 may pass the routing table for fallback 106 and the memory location difference information to the route lookup unit 124 for activation. The route lookup unit 124 may perform destination route lookup of the payload IP packet and pass the routing table for fallback 106 and the memory location difference information to the fallback processing unit 128 for activation when a route lookup result corresponds to a routing entry representing fallback. The fallback processing unit 128 may activate destination route lookup of the incoming IP packet by using the routing table for fallback 106 and the incoming IP packet which is restored by using the memory location difference information.

The route lookup unit 126 performs destination route lookup of the payload IP packet by using the routing table for payload forwarding 104. The route lookup unit 126 may be an example of a second route lookup unit.

The packet processing unit 122 may be activated by passing the routing table for fallback 106 and the memory location difference information to the route lookup unit 126. The route lookup unit 126 may perform destination route lookup of the payload IP packet by using the routing table for payload forwarding 104, pass the incoming IP packet restored by using the routing table for fallback 106 and the memory location difference information to the route lookup unit 124 when a corresponding route does not exist, and activate destination route lookup of the incoming IP packet by using the routing table for fallback 106.

The packet processing unit 122 may perform destination route lookup of the payload IP packet by using the routing table for payload forwarding 104, pass the incoming IP packet restored by using the routing table for fallback 106 and the memory location difference information to the route lookup unit 124 when a corresponding route does not exist, and activate destination route lookup of the incoming IP packet by using the routing table for fallback 106.

The gateway device 100 may change processing content depending on whether or not the incoming IP packet is a GTP-U message. For example, the route control unit 120 carries out the control in a manner that when the incoming IP packet is not a GTP-U message, destination route lookup of the payload IP packet is performed by using the routing table for payload forwarding 104, when a route of the payload IP packet exists, the payload IP packet encapsulated by an appropriate header is transmitted to the destination, when a route of the payload IP packet does not exist, destination route lookup of the incoming IP packet is performed by using the routing table for fallback 106. For example, the route control unit 120 carries out the control in a manner that when the incoming IP packet is a GTP-U message, destination route lookup of the incoming IP packet is performed by using the routing table for fallback 106 without performing destination route lookup using the routing table for payload forwarding.

The gateway device 100 performs processing by identifying whether or not the incoming IP packet is a GTP-U message based on the GTP-U header of the incoming IP packet. Specifically, for example, when a value of a GTP-U message type in a GTP-U header of an incoming IP packet is 255, the route control unit 120 of the gateway device 100 may perform the processing by identifying that the incoming IP packet is not a GTP-U message. On the other hand, when a value of a GTP-U message type of a GTP-U header in an incoming IP packet is in a range from 0 to 254, the route control unit 120 of the gateway device 100 may perform the processing by identifying that the incoming IP packet is a GTP-U message. By changing the processing on the incoming IP packet depending on the GTP-U message type, because route lookup is performed by using the routing table for fallback 106, the GTP-U message required for maintaining and managing a session such as a PDU session to which the GTP-U message belongs is forwarded to UPF. With this configuration, while the session such as the PDU session serving as an anchor is maintained, route lookup of the payload IP packet and fallback processing can be reliably performed.

The gateway device 100 may change the processing content based on the GTP-U message type in the GTP-U header of the incoming IP packet. For example, the route control unit 120 carries out the control in a manner that destination route lookup of the payload IP packet is performed by using the routing table for payload forwarding 104 when the GTP-U message type in the GTP-U header of the incoming IP packet satisfies a first condition, transmits the payload IP packet encapsulated by an appropriate header to the destination when a route of the payload IP packet exists, and performs destination route lookup of the incoming IP packet by using the routing table for fallback 106 when a route of the payload IP packet does not exist. For example, the route control unit 120 carries out the control in a manner that when the GTP-U message type in the GTP-U header of the incoming IP packet satisfies a second condition, destination route lookup of the incoming IP packet is performed by using the routing table for fallback 106 without performing destination route lookup using the routing table for payload forwarding. The first condition may be satisfied when the value of the GTP-U message type in the GTP-U header of the incoming IP packet is 255. The second condition may be satisfied when the value of the GTP-U message type in the GTP-U header of the incoming IP packet is in a range from 0 to 254.

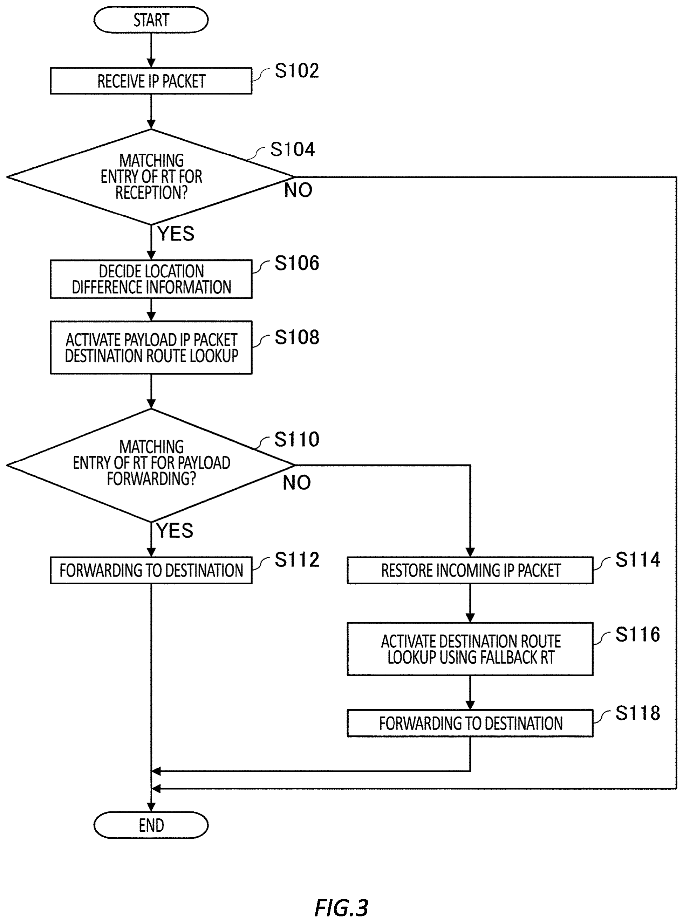

Fig. 3 schematically illustrates an example of a flow of software processing by the gateway device 100. Here, a flow of processing from reception of an IP packet until forwarding of the IP packet will be described.

In step 102 (step may be abbreviated to be described as S), the packet reception unit 114 receives an IP packet. In S104, the route control unit 120 performs destination route lookup of the incoming IP packet received in S102 by using the routing table for reception 102. When an entry of the routing table for reception 102 is matched, the flow proceeds to S106, and when an entry is not matched, the processing is ended.

In S106, the route control unit 120 decides memory location difference information representing a difference in memory locations between the incoming IP packet and the payload IP packet included in the incoming IP packet. In S108, the route control unit 120 advances a pointer to the payload IP packet to activate destination route lookup of the payload IP packet.

In S110, the route control unit 120 performs destination route lookup of the payload IP packet by using the routing table for payload forwarding 104. When an entry of the routing table for payload forwarding 104 is matched, the flow proceeds to S112, and when an entry is not matched, the flow proceeds to S114. In S112, the route control unit 120 forwards the payload IP packet encapsulated by an appropriate header to the destination as an outgoing IP packet.

In S114, the route control unit 120 restores the incoming IP packet by using the memory location difference information decided in S106. The route control unit 120 may restore the incoming IP packet by moving the pointer according to the difference represented by the memory location difference information.

In S116, the route control unit 120 activates destination route lookup using the routing table for fallback 106 of the restored incoming IP packet. The route control unit 120 performs destination route lookup of the incoming IP packet restored by using the routing table for fallback 106. In S118, the route control unit 120 forwards the restored incoming IP packet to the destination.

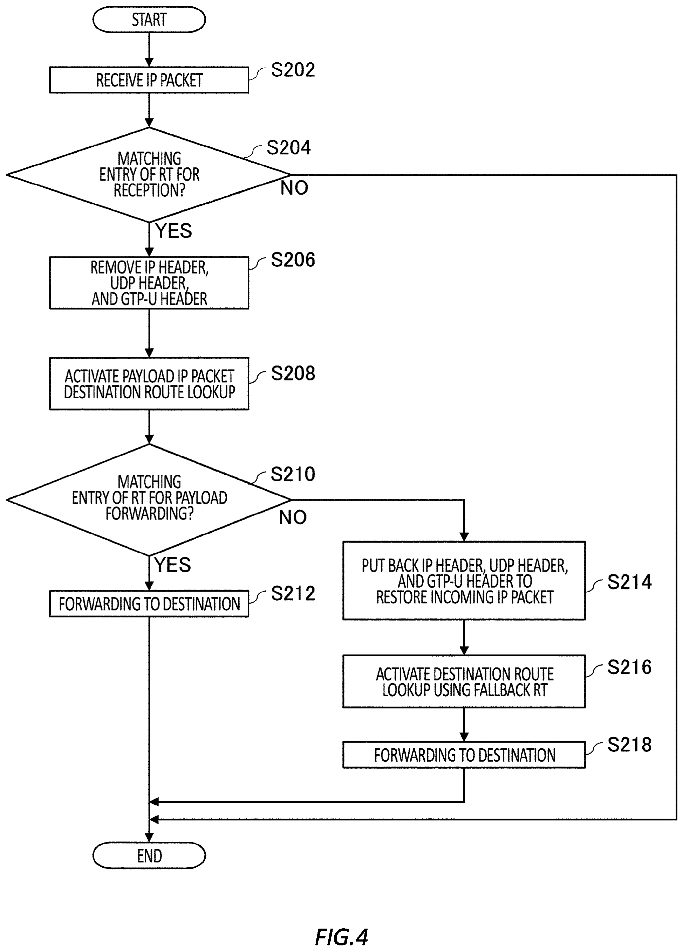

Fig. 4 schematically illustrates an example of a flow of hardware processing by the gateway device 100. Here, a flow of processing from reception of an IP packet until forwarding of the IP packet will be described.

In S202, the packet reception unit 114 receives an IP packet. In S204, the route control unit 120 performs, by using the routing table for reception 102, destination route lookup of the incoming IP packet received in S102. When an entry of the routing table for reception 102 is matched, the flow proceeds to S206, and when an entry is not matched, the processing is ended.

In S206, the route control unit 120 removes the IP header, the UDP header, and the GTP-U header from the incoming IP packet to be separately stored. In S208, the route control unit 120 activates destination route lookup of the payload IP packet.

In S210, the route control unit 120 performs destination route lookup of the payload IP packet by using the routing table for payload forwarding 104. When an entry of the routing table for payload forwarding 104 is matched, the flow proceeds to S212, and when an entry is not matched, the flow proceeds to S214. In S212, the route control unit 120 forwards the payload IP packet encapsulated by an appropriate header to the destination as an outgoing IP packet.

In S214, the route control unit 120 puts back the IP header, the UDP header, and the GTP-U header separately stored in S206 to the payload IP packet to restore the incoming IP packet. The route control unit 120 may restore the incoming IP packet by moving the pointer according to the difference represented by the memory location difference information.

In S216, the route control unit 120 activates destination route lookup using the routing table for fallback 106 for the restored incoming IP packet. The route control unit 120 performs destination route lookup of the incoming IP packet restored by using the routing table for fallback 106. In S218, the route control unit 120 forwards the restored incoming IP packet to the destination.

As described above, the gateway device 100 may achieve the packet forwarding processing by software processing. Herein, an implementation example using VPP (Vector Packet Processing) will be described as an embodiment by software processing.

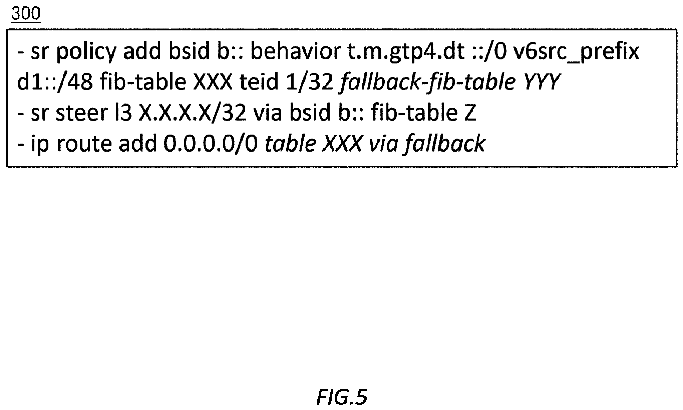

Fig. 5 illustrates an example of a setting 300 in VPP. The gateway device 100 may define various types of information by using an SR policy as in "sr policy add bsid b:: behavior t.m.gtp4.dt ::/0 v6src_prefix d1::/48 fib-table XXX teid 1/32 fallback-fib-table YYY" represented in Fig. 5. The gateway device 100 may define gtp4.dt as a process entity. Herein, gtp4.dt may be a packet processing unit. In addition, gtp6.dt may be a packet processing unit. The gateway device 100 may define gtp6.dt as a process entity. The gateway device 100 may specify XXX as a fib table for payload IP packet forwarding. The gateway device 100 may specify YYY as a fallback-fib fib table.

As in "sr steer 13 X.X.X.X/32 via bsid b:: fib-table Z" represented in Fig. 5, for example, the gateway device 100 may specify and set X.X.X.X/32 as a routing entry for incoming IP packet forwarding and Z as a fib table for incoming IP packet forwarding.

For example, when a packet with a fallback-fib setting is set as a target in a packet processing in a node of gtp4/6.dt (gtp4.dt or gtp6.dt), the gateway device 100 records a fib table at a fallback destination, an address family of an incoming packet, and an amount of movement of a buffer position pointer in metadata of the packet and sets ip4/6 (ip4 or ip6)-lookup as the next node. Herein, ip4/6 (ip4 or ip6)-lookup may be the first route lookup unit. Note that a route in which fallback is set as next hop is created in fib of the payload IP packet. The route may be a default route, for example. When processing is performed in ip4/6-lookup of the payload IP packet, the gateway device 100, if fallback is consistent with the route set as next hop, the ip4/6-fallback node is set as the next node, and if fallback is not consistent with the route, the next node is set according to the route. Herein, ip4/6-fallback may be a fallback processing unit. In the ip4/6-fallback node, fib table is changed to a fib table for fallback, the buffer position pointer is moved back by the amount of movement of the buffer position pointer recorded in the metadata, and ip4/6-lookup node of the address family of the incoming packet recorded in the metadata is set as the next node.

A configuration may be adopted in which the gateway device 100 does not use a portion "ip route add 0.0.0.0/0 table XXX via fallback" in the setting 300 exemplified in Fig. 5.

For example, when a packet with a fallback-fib setting is set as a target in node processing of gtp4/6.dt, the gateway device 100 performs destination route lookup of the payload IP packet at this point for checking the existence of a route in the fib table for payload IP packet. If a route exists, the processing continues as is. If a route does not exist, the buffer position pointer is rolled back to restore the incoming packet, and thereafter, an appropriate ip4/6-lookup node according to an address family is set as a next node.

As another method, for example, when a packet with a fallback-fib setting is set as a target in node processing of gtp4/6.dt, the gateway device 100 records an address family of the incoming packet in the metadata, then checks an address family of the payload IP packet, and sets a gtp-fallback4/6 node according to the result as the next node. The gtp-fallback4/6 node may be the second route lookup unit. The gateway device 100 advances the buffer position pointer to the payload IP packet in the gtp-fallback4/6 node, performs lookup in the set fib table, changes the fib table into a fib table for fallback when a route does not exist (= drop), restores the incoming packet by moving the buffer position pointer back to the position of the incoming IP packet, and sets the ip4/6-lookup node according to the recorded address family as the next node. When a route exists, the next node according to the lookup result is set as the next node as it is.

As another method, for example, when a packet with a fallback-fib setting is set as a target in node processing of gtp4/6.dt, the gateway device 100 records a fib table at a fallback destination, an address family of the incoming packet, and an amount of movement of the buffer position pointer in the metadata of the packet and sets ip4/6-fallback as the next node. Herein, ip4/6-fallback in this case may be the second route lookup unit. Lookup is performed in the set fib table in ip4/6-fallback, and when a route does not exist (= drop), the fib table is changed to a fib table for fallback, the pointer is moved back by the recorded amount of movement of the buffer position pointer, and the ip4/6-lookup node of the recorded address family is set as the next node. When a route exists, the next node according to the lookup result is set as the next node as it is.

As described above, the gateway device 100 may achieve the packet forwarding processing by hardware processing. Herein, as an embodiment by hardware processing, an implementation example using a packet switching programmable ASIC will be described.

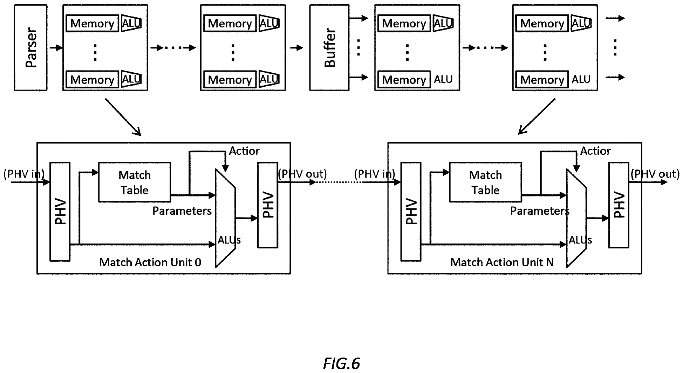

Fig. 6 schematically illustrates an example of a configuration of the packet switching programmable ASIC. First, an implementation in a case where lookup is performed only once for an Inner packet will be described.

By using a P4 (Programming Protocol-Independent Packet Processors) language or the like, a field for storing an Outer IPv4/v6 header, a UDP header, and a GTP-U header and a field for specifying a fib to be looked up upon fallback are generated in PHV (Packet Header Vector) of packet processing Pipeline of the ASIC.

Then, the ASIC inputs an incoming packet into Pipeline.

Then, Ingress Parser of Pipeline stores the incoming packet and header information of an Inner payload packet in the PHV. The incoming packet header stores an Outer IPv4/v6 header, a UDP header, and a GTP-U header in the PHV. When a UDP header is regarded as a template, the UDP header field may be omitted. The PHV field which stores the Outer IPv4/v6 header, the UDP header, and the GTP-U header is saved until the presence or absence of the existence of a matching table entry is confirmed in the next stage or subsequent stages that Pipeline passes through.

Then, in MAU (Match Action Unit) stages that are a next and subsequent stages of Ingress Parser in Pipeline, in any of the MAU stages in Pipeline in which lookup of the Inner payload packet is performed, when a table entry matching an Inner payload packet header is found, processing represented by the matched entry is performed.

Then, when a matching table entry is not found in any MAU stage in Pipeline or when a table entry representing fallback is hit, in any of the MAU stages preceding a stage in which the packet is output to the packet buffer from Pipeline, the original incoming IP packet may be restored by using the incoming IP packet headers (the Outer IPv4/IPv6 header, the UDP header, and the GTP-U header) stored in the PHV to be thereafter output to the packet buffer, appropriate header information may be added to the incoming IP packet through Egress Pipeline or header information may be added and changed, and the packet may be transmitted to an interface at an appropriate output destination.

Next, an implementation in a case where lookup is performed twice for an Inner packet and an Outer packet will be described.

By using a P4 language or the like, a field for storing an Outer IPv4/v6 header, a UDP header, and a GTP-U header and a field for specifying a fib to be looked up upon fallback are generated in PHV (Packet Header Vector) of packet processing Pipeline of the ASIC.

Then, the ASIC inputs an incoming packet into Pipeline.

Then, Ingress Parser of Pipeline stores the incoming packet and header information of an Inner payload packet in the PHV. The incoming packet header stores an Outer IPv4/v6 header, a UDP header, and a GTP-U header in the PHV. When a UDP header is regarded as a template, the UDP header field may be omitted. The PHV field which stores the Outer IPv4/v6 header, the UDP header, and the GTP-U header is saved until the presence or absence of the existence of a matching table entry is confirmed in the next stage or subsequent stages that Pipeline passes through.

Then, in MAU (Match Action Unit) stages that are a next and subsequent stages of Ingress Parser in Pipeline, in any of the MAU stages in Pipeline in which lookup of the Inner payload packet is performed, when a table entry matching an Inner payload packet header is found, processing represented by the matched entry is performed.

When a matching table entry is not found in any MAU stage in Pipeline or when a table entry representing fallback is hit, and when Egress Pipeline does not have a capability to perform fib lookup, in any of the MAU stages preceding a stage in which the packet is output to the packet buffer from Pipeline, the fib table for fallback is looked up by using the Outer IPv4/v6 header, the UDP header, and the GTP-U header stored in the PHV. When a table entry matching the incoming IP packet header is found, the original incoming IP packet is restored and then output to the packet buffer as processing represented by the matched entry. When Egress Pipeline has a capability to perform fib lookup, Ingress Pipeline restores the original incoming IP packet without performing lookup of the fib table for fallback and then outputs the restored packet to the packet buffer.

When Egress Pipeline has a capability to perform fib lookup, the ASIC outputs the restored incoming packet to the packet buffer to be then input to Egress Pipeline. At this time, in any of the MAU stages in Egress Pipeline, a value for specifying the fib table for lookup of the restored incoming packet is stored in the PHV.

In any of the MAU stages in Egress Pipeline, lookup of the restored incoming packet is performed, and when a matching table entry is found, processing represented by the matched entry is performed. When a matching table entry is not found in any MAU stage, previously defined processing is performed such as dropping of a packet. When Egress Pipeline does not have a capability to perform fib lookup, the ASIC may output the restored incoming packet to the packet buffer, add appropriate header information to the incoming IP packet through Egress Pipeline or add and change header information, and transmit the packet to an interface at an appropriate output destination.

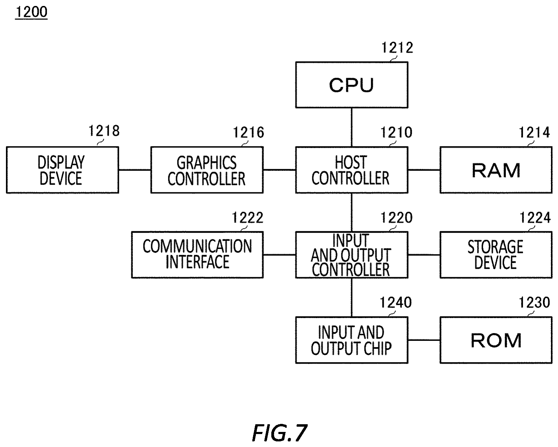

Fig. 7 schematically illustrates an example of a hardware configuration of a computer 1200 which functions as the gateway device 100. A program installed in the computer 1200 can cause the computer 1200 to function as one or more "units" of an apparatus according to the present embodiment, or cause the computer 1200 to perform operations associated with the apparatus or perform said one or more "units" thereof according to the present embodiment, and/or cause the computer 1200 to perform the process according to the present embodiment or perform the steps of the said process. Such a program may be executed by a CPU 1212 to cause the computer 1200 to perform particular operations associated with some or all of the blocks in the flowcharts and block diagrams described in the present specification.

The computer 1200 according to the present embodiment includes the CPU 1212, a RAM 1214, and a graphics controller 1216, which are connected to each other via a host controller 1210. The computer 1200 also includes input and output units such as a communication interface 1222, a storage device 1224, a DVD drive and an IC card drive, which are connected to the host controller 1210 via an input and output controller 1220. The DVD drive may be a DVD-ROM drive, a DVD-RAM drive, etc. The storage device 1224 may be a hard disk drive, a solid-state drive, and the like. The computer 1200 also includes a ROM 1230 and a legacy input and output unit such as a keyboard, which are connected to the input and output controller 1220 via an input/output chip 1240.

The CPU 1212 operates in accordance with the programs stored in the ROM 1230 and the RAM 1214, thereby controlling each unit. The graphics controller 1216 acquires image data which is generated by the CPU 1212 in a frame buffer or the like provided in the RAM 1214 or in itself so as to cause the image data to be displayed on a display device 1218.

The communication interface 1222 communicates with other electronic devices via a network. The storage device 1224 stores a program and data used by the CPU 1212 in the computer 1200. The DVD drive reads the programs or the data from the DVD-ROM or the like, and provides the storage device 1224 with the programs or the data. The IC card drive reads the program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input and output units via a USB port, a parallel port, a serial port, a keyboard port, a mouse port, or the like to the input and output controller 1220.

A program is provided by a computer readable storage medium such as the DVD-ROM or the IC card. The program is read from the computer readable storage medium, installed into the storage device 1224, RAM 1214, or ROM 1230, which are also examples of a computer readable storage medium, and executed by the CPU 1212. Information processing written in these programs is read by the computer 1200, and provides cooperation between the programs and the various types of hardware resources described above. An apparatus or method may be configured by achieving the operation or processing of information in accordance with the usage of the computer 1200.

For example, when a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage device 1224, the DVD-ROM, or the IC card, and transmits the read transmission data to a network or writes reception data received from a network to a reception buffer region or the like provided on the recording medium.

In addition, the CPU 1212 may cause all or a necessary portion of a file or a database to be read into the RAM 1214, the file or the database having been stored in an external recording medium such as the storage device 1224, the DVD drive (DVD-ROM), the IC card, etc., and perform various types of processing on the data on the RAM 1214. Next, the CPU 1212 may write the processed data back into the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby acquiring the attribute value of the second attribute associated with the first attribute that satisfies a predetermined condition.

The above described program or software modules may be stored in the computer readable storage medium on or near the computer 1200. In addition, a recording medium such as a hard disk or a RAM provided in a server system connected to a dedicated communication network or the Internet can be used as the computer readable storage medium, thereby providing the program to the computer 1200 via the network.

Blocks in flowcharts and block diagrams in the present embodiments may represent steps of processes in which operations are executed or "units" of apparatuses responsible for executing operations. A specific step and "unit" may be implemented by a dedicated circuit, a programmable circuit supplied along with a computer readable instruction stored on a computer readable storage medium, and/or a processor supplied along with the computer readable instruction stored on the computer readable storage medium. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and another logical operation, and a flip-flop, a register, and a memory element, such as a field programmable gate array (FPGA), a programmable logic array (PLA), or the like.

The computer readable storage medium may include any tangible device capable of storing an instruction executed by an appropriate device, so that the computer readable storage medium having the instruction stored thereon constitutes a product including an instruction that may be executed in order to provide means for executing an operation designated by a flowchart or a block diagram. An example of the computer readable storage medium may include an electronic storage medium, a magnetic storage medium, an optical storage medium, an electromagnetic storage medium, a semiconductor storage medium, etc. A more specific example of the computer readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a Blu-ray (registered trademark) disk, a memory stick, an integrated circuit card, or the like.

The computer readable instructions may include an assembler instruction, an instruction-set-architecture (ISA) instruction, a machine instruction, a machine-dependent instruction, a microcode, a firmware instruction, state-setting data, or either of a source code or an object code written in any combination of one or more programming languages including an object-oriented programming language such as Smalltalk (registered trademark), JAVA (registered trademark), and C++, or the like, and a conventional procedural programming language such as a "C" programming language or a similar programming language.

The computer readable instruction may be provided to a general purpose computer, a special purpose computer, or a processor or programmable circuit of another programmable data processing apparatus locally or via a local area network (LAN), a wide area network (WAN) such as the Internet or the like in order that the general purpose computer, the special purpose computer, or the processor or the programmable circuit of another programmable data processing apparatus executes the computer readable instruction to generate means for executing operations designated by the flowchart or the block diagram. Examples of the processor include a computer processor, a processing unit, a microprocessor, a digital signal processor, a controller, a microcontroller, and the like.

While the embodiments of the present invention have been described, the technical scope of the present invention is not limited to the above-described embodiments. It is apparent to persons skilled in the art that various alterations or improvements can be added to the above-described embodiments. It is also apparent from the scope of the claims that the embodiments added with such alterations or improvements can be included in the technical scope of the invention.

The operations, procedures, steps, and stages of each process executed by a device, system, program, and method shown in the claims, embodiments, or diagrams can be achieved in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be executed in this order.

### EXPLANATION OF REFERENCES

100: gateway device;
102: routing table for reception;
104: routing table for payload forwarding;
106: routing table for fallback;
112: storage unit;
114: packet reception unit;
120: route control unit;
122: packet processing unit;
124: route lookup unit;
126: route lookup unit;
128: fallback processing unit;
210: incoming IP packet;
212: IP/UDP header;
214: GTP-U header;
216: payload IP packet;
220: outgoing IP packet;
222: SRv6 header;
226: payload IP packet;
230: outgoing IP packet;
232: IP/UDP header;
234: GTP-U header;
236: payload IP packet;
300: setting;
1200: computer;
1210: host controller;
1212: CPU;
1214: RAM;
1216: graphics controller;
1218: display device;
1220: input and output controller;
1222: communication interface;
1224: storage device;
1230: ROM;
1240: input and output chip.

## Claims

1. A gateway device comprising:
a routing table for reception for forwarding an incoming IP packet which is received from outside and which has a payload IP packet encapsulated;
a routing table for payload forwarding for forwarding the payload IP packet; and
a routing table for fallback for forwarding the incoming IP packet when an entry for forwarding the payload IP packet included in the incoming IP packet is not included in the routing table for payload forwarding.

2. The gateway device according to claim 1, comprising:
a packet reception unit which receives an IP packet; and
a route control unit which carries out control in a manner that destination route lookup of the incoming IP packet received by the packet reception unit is performed by using the routing table for reception, destination route lookup of the payload IP packet is performed by using the routing table for payload forwarding when a route of the incoming IP packet exists, the payload IP packet is transmitted to a destination when a route of the payload IP packet exists, and destination route lookup of the incoming IP packet is performed by using the routing table for fallback when a route of the payload IP packet does not exist.

3. The gateway device according to claim 2, wherein
the incoming IP packet includes an IP header, a UDP header, a GTP-U header, and the payload IP packet, and
when a route of the payload IP packet exists, the route control unit transmits the payload IP packet encapsulated by an appropriate header according to a result of the destination route lookup of the payload IP packet to the destination.

4. The gateway device according to claim 3, wherein
when a route of the payload IP packet exists, the route control unit transmits, to the destination, the incoming IP packet obtained by converting the IP header, the UDP header, and the GTP-U header into a header compliant with SRv6 which includes an IPv6 header or an IPv6 header and an SR header.

5. The gateway device according to any one of claims 2 to 4, wherein
the route control unit carries out the control in a manner that memory location difference information representing a memory location difference between the incoming IP packet and the payload IP packet is decided, a pointer is advanced to a beginning of the payload IP packet, and destination route lookup of the payload IP packet is performed by using the routing table for payload forwarding when a route of the incoming IP packet exists, and in a manner that the incoming IP packet is restored by using the memory location difference information, and destination route lookup of the incoming IP packet is performed by using the routing table for fallback when a route of the payload IP packet does not exist.

6. The gateway device according to any one of claims 2 to 4, wherein
the incoming IP packet includes an IP header, a UDP header, a GTP-U header, and the payload IP packet, and
the route control unit carries out the control in a manner that the IP header, the UDP header, and the GTP-U header are removed from the incoming IP packet, and destination route lookup of the payload IP packet is performed by using the routing table for payload forwarding when a route of the incoming IP packet exists, and in a manner that the incoming IP packet is restored by using the IP header, the UDP header, and the GTP-U header, and destination route lookup of the incoming IP packet is performed by using the routing table for fallback when a route of the payload IP packet does not exist.

7. The gateway device according to any one of claims 2 to 4, wherein
in a case where a route of the incoming IP packet exists, the route control unit carries out the control in a manner that
destination route lookup of the payload IP packet is performed by using the routing table for payload forwarding when a GTP-U message type in a GTP header of the incoming IP packet satisfies a first condition, the payload IP packet encapsulated by an appropriate header according to a destination route lookup result of the payload IP packet is transmitted to the destination when a route of the payload IP packet exists, and destination route lookup of the incoming IP packet is performed by using the routing table for fallback when a route of the payload IP packet does not exist, and carries out the control in a manner that
destination route lookup of the incoming IP packet is performed by using the routing table for fallback without performing destination route lookup using the routing table for payload forwarding when the GTP-U message type in the GTP header of the incoming IP packet satisfies a second condition.

8. The gateway device according to claim 7, wherein
the route control unit carries out the control in a manner that
destination route lookup of the payload IP packet is performed by using the routing table for payload forwarding when a value of the GTP-U message type in the GTP-U header of the incoming IP packet is 255, the payload IP packet encapsulated by an appropriate header according to a destination route lookup result of the payload IP packet is transmitted to the destination when a route of the payload IP packet exists, and destination route lookup of the incoming IP packet is performed by using the routing table for fallback when a route of the payload IP packet does not exist, and carries out the control in a manner that
destination route lookup of the incoming IP packet is performed by using the routing table for fallback without performing destination route lookup using the routing table for payload forwarding when the value of the GTP-U message type in the GTP-U header of the incoming IP packet is in a range from 0 to 254.

9. The gateway device according to any one of claims 1 to 8, comprising a routing table in which a routing entry that specifies the routing table for payload forwarding and that can specify the routing table for fallback can be registered.

10. The gateway device according to any one of claims 1 to 8, wherein
the routing table for reception has a routing entry that specifies the routing table for payload forwarding and the routing table for fallback by referring to a routing entry which is registered in any routing table existing in a gateway and that specifies the routing table for payload forwarding and specifies the routing table for fallback.

11. The gateway device according to any one of claims 1 to 8, wherein the routing table for payload forwarding includes a routing entry representing fallback.

12. The gateway device according to any one of claims 2 to 8, wherein
the route control unit carries out the control in a manner that a routing table that has been set as a routing table for fallback by another routing table does not have a setting or a routing entry for specifying another routing table as a routing table for fallback.

13. A control method executed by a computer, the control method comprising:
receiving a packet by receiving an IP packet having a payload IP packet encapsulated by an IP header or an IP header and a tunnel protocol header; and
controlling a route by carrying out control in a manner that destination route lookup of an incoming IP packet received in receiving the packet is performed by using a routing table for reception for forwarding the incoming IP packet, destination route lookup of the payload IP packet is performed by using a routing table for payload forwarding for forwarding the payload IP packet when a route of the incoming IP packet exists, the payload IP packet is transmitted to a destination of the payload IP packet or a header obtained by encapsulating the payload IP packet is converted and transmitted to the destination when a route of the payload IP packet exists, and when a route of the payload IP packet does not exist, destination route lookup of the incoming IP packet is performed by using a routing table for fallback for forwarding the incoming IP packet if an entry for forwarding the payload IP packet is not included in the routing table for payload forwarding.

14. A program for causing a computer to execute the control method according to claim 13.
